# FASCICULE DE BREVET EUROPEEN

(11) **EP 1 378 099 B1**
(45) Date de publication et mention de la délivrance du brevet: **15.12.2004**
(21) Numéro de dépôt: 02732793.1
(22) Date de dépôt: 09.04.2002
(51) Int. Cl.: H04L 12/58, G06F 17/60

(54) **SYSTEME DE TRANSMISSION D'INFORMATIONS A UNE LISTE DE DESTINATAIRES**
SYSTEM ZUM SENDEN VON DATEN ZU EINER LISTE VON EMPFÄNGERN
SYSTEM FOR TRANSMITTING DATA TO A LIST OF RECIPIENTS

(30) Priorité: 10.04.2001 FR 0104899
(43) Date de publication de la demande: 07.01.2004
(73) Titulaire: FRANCE TELECOM, 75015 Paris (FR)
(72) Inventeur: VACQUIE, Luc, F-31380 Saint Jean l'Herm (FR); LEGAY, Philippe, 22700 Louannec (FR); PETTIER, Isabelle, 22700 Perros-guirec (FR)
(74) Mandataire: Domenego, Bertrand
(86) Numéro de dépôt international: PCT/FR2002/001242
(87) Numéro de publication internationale: WO 2002/084962

(56) Documents cités:
- WO-A-01/01663
- WO-A-02/03216

## Description

La présente invention concerne des systèmes de transmission d'informations à une liste de destinataires choisis dans un annuaire électronique, mettant en oeuvre plusieurs moyens de communication.

Il existe à ce jour des dispositifs logiciels permettant d'envoyer des télécopies, des e-mails ou les deux à une liste de destinataires choisis dans un annuaire électronique voir par exemple le document WO 01/01663. Toutefois, ces systèmes imposent de choisir le moyen de communication à utiliser, c'est-à-dire ici la télécopie ou l'e-mail, pour joindre chaque destinataire avant d'exécuter l'envoi d'un message. Cette sélection du moyen de communication avant d'exécuter l'envoi du message représente une tâche de secrétariat d'autant plus longue que le nombre de moyens de communication utilisés est élevé.

De plus en cas d'échec définitif de la transmission du message, un nouveau moyen de communication doit être manuellement activé.

Par ailleurs, dans les systèmes existants un expéditeur a accès à toutes les informations contenues dans l'annuaire électronique, et notamment à celles concernant les moyens de communication avec un destinataire. Par conséquent, les destinataires hésitent le plus souvent à fournir des informations personnelles telles que leur numéro de téléphone personnel, de peur que ces informations soient utilisées à mauvais escient.

La présente invention vise à remédier à ces inconvénients.

Elle a donc pour objet un système de transmission d'informations à une liste de destinataires choisis dans un annuaire électronique, ledit système comportant :
- des moyens pour enregistrer les informations à transmettre dans un format d'entrée ;
- des moyens pour sélectionner les destinataires des informations enregistrées, dans l'annuaire électronique;
- plusieurs moyens de communication, chacun de ces moyens étant adaptés pour transmettre des informations enregistrées dans un format particulier ; caractérisé en ce que des moyens automatisés de sélection des moyens de communication à utiliser au moins en fonction du format d'entrée des informations à transmettre.

Suivant d'autres caractéristiques de l'invention :
- les moyens automatisés de sélection comportent des moyens de détermination du format d'entrée des informations à transmettre à partir du type de celles-ci ;
- il comporte des modules d'adaptation aptes à transformer une information enregistrée dans un format d'entrée prédéterminé, en une information adaptée pour être transmise par au moins l'un desdits moyens de communication, et les moyens de sélection déterminent les moyens de communication à utiliser en partie en fonction de l'existence pour une information à transmettre de modules d'adaptation correspondants ;
- il comporte des moyens de stockage d'informations destinées à déterminer en partie les moyens de communication à utiliser ;
- les moyens de stockage d'informations contiennent des informations indiquant quels sont les moyens de communication dont le destinataire est équipé ;
- les moyens de stockage d'informations contiennent des informations indiquant quels sont les moyens de communication préférés de chaque destinataire, et les moyens de sélection déterminent les moyens de communication à utiliser en partie en fonction de ces informations ;
- les moyens de stockage d'informations contiennent des informations indiquant quel est le degré d'urgence d'une information à transmettre, et les moyens de sélection déterminent les moyens de communication à utiliser en partie en fonction de ces informations ;
- il comporte des moyens pour conserver la confidentialité d'au moins certaines des informations contenues dans les moyens de stockage d'informations, vis à vis des expéditeurs des informations à transmettre ;
- lesdites certaines des informations contenues dans les moyens de stockage d'informations se composent au moins des informations nécessaires pour mettre en oeuvre les moyens de communication dont le destinataire est équipé ; et
- il comporte des moyens de confirmation de la réception de messages sonores sous la commande de moyens de communication formé de téléphones munis de claviers à touches.

L'invention sera mieux comprise à la lecture de la description qui va suivre, donnée uniquement à titre d'exemple et faite en se référant aux dessins annexés, sur lesquels :
la Fig.1 est une vue schématique d'un système conforme à l'invention,
la Fig.2 est une vue schématique de moyens de sélection de moyens de communication, conformes à l'invention;
la Fig.3 est un exemple de tableau de correspondance mis en oeuvre par les moyens de sélection de la Fig.2.

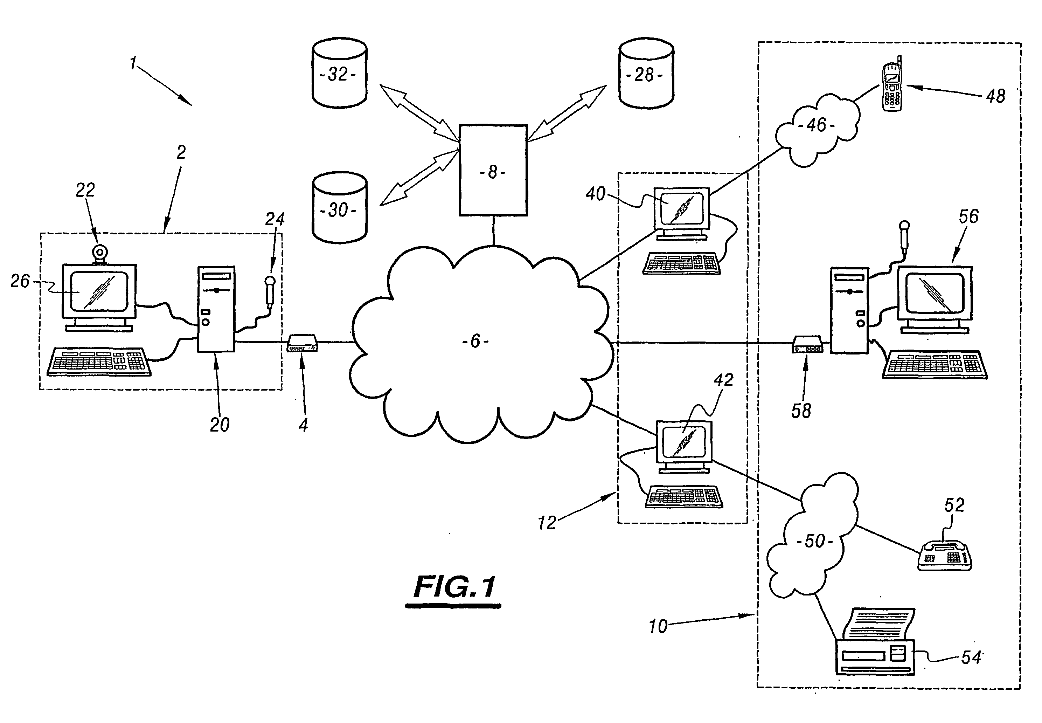

La figure 1 représente un système 1 conforme à l'invention comportant des moyens 2 d'enregistrement et de transmission d'informations raccordés par l'intermédiaire d'un modem 4 et d'un réseau 6 de transmission d'informations à un serveur 8. Ce système comporte également plusieurs moyens de communication 10 raccordés par l'intermédiaire du réseau 6 au serveur 8.

Les moyens 2 d'enregistrement et de transmission d'informations se composent de tout moyen adapté pour enregistrer et transmettre vers le serveur des informations dans un format numérique. Ils comportent ici un ordinateur 20 raccordé à une camera 22 et à un microphone 24 de manière à pouvoir enregistrer des séquences vidéo. Ces séquences vidéo sont par exemple enregistrées au format MPEG dans une mémoire (non représentée) de l'ordinateur 20. L'ordinateur comporte également une application de courrier électronique et un navigateur Intemet 26 classiques destinés à transmettre des informations enregistrées dans un format numérique vers le serveur 8.

Le réseau 6 de transmission d'informations reliant des ordinateurs tels que l'ordinateur 20 au serveur 8 est formé par le réseau connu sous le nom de toile d'araignée mondiale (World Wide WEB), appelé ici réseau Internet.

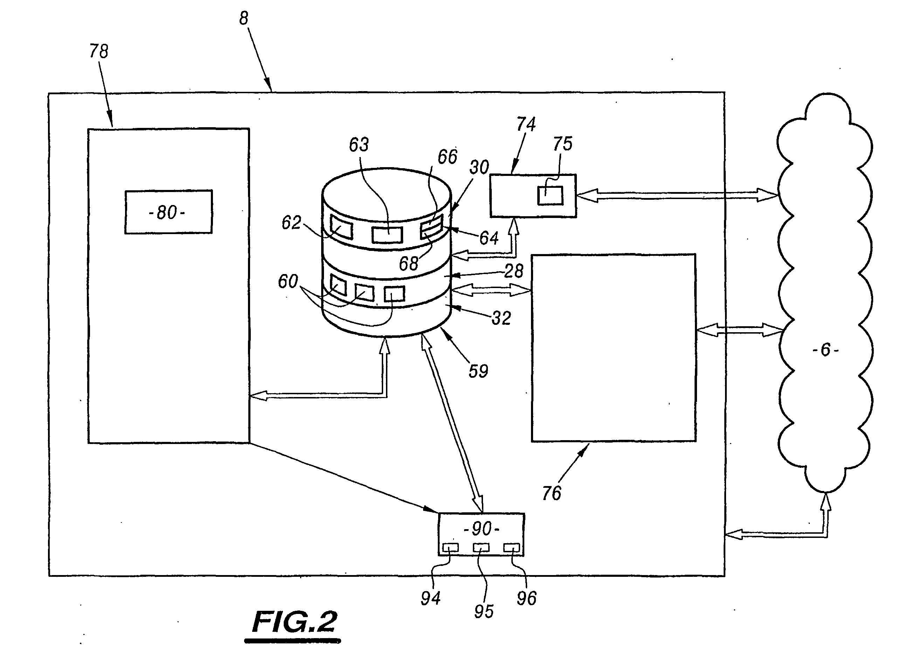

Le serveur 8 est associé à des moyens 28, 30 de stockage d'informations et à un annuaire électronique 32. Ces moyens 28, 30 et l'annuaire 32 seront décrits en regard de la figure 2.

Le serveur 8 est ici un serveur Internet, c'est-à-dire un serveur raccordé au réseau Internet 6 est adapté pour coopérer avec des navigateurs Internet classiques tels que le navigateur Internet 26. Une description plus détaillée de ce serveur sera faite en regard de la figure 2.

Le serveur 8 est raccordé aux moyens de communication 10 soit directement soit par l'intermédiaire de passerelles 12.

Le système 1 comporte deux passerelles 40, 42. La passerelle 40 est adaptée pour relier le réseau Internet 6 à un réseau hertzien 46 de transmission d'informations de téléphonie mobile. Ainsi le serveur 8 est relié par l'intermédiaire de cette passerelle 40 à des premiers moyens de communication formés avec des téléphones mobiles tels que le téléphone mobile 48.

La passerelle 42 relie le réseau Internet 6 à un réseau 50 commuté de transmission d'informations. Ainsi le serveur 8 est relié par l'intermédiaire de la passerelle 42 à des deuxièmes et à des troisièmes moyens de communication 52, 54. Les deuxièmes moyens 52 de communication sont formés de téléphones fixes tandis que les troisièmes moyens 54 de communication sont formés de télécopieurs.

Le serveur 8 est également relié directement à des quatrièmes moyens de communication 56 formés d'ordinateurs raccordés au réseau Internet 6 par l'intermédiaire de modems 58. Ces ordinateurs sont adaptés pour recevoir des courriers électroniques.

Les moyens 10 de communication comportant dans le mode de réalisation particulier décrit ici des premiers, deuxièmes, troisièmes et quatrièmes moyens de communication 46, 53, 54 et 56. On notera que de nombreux autres moyens de communication peuvent être utilisés, en plus ou en remplacement de ceux-ci.

La figure 2 représente le serveur 8 dans le cas particulier où les moyens 28 et 30 de stockage d'informations sont formés d'un disque dur 59 du serveur, l'annuaire électronique 32 étant lui aussi enregistré sur ce même disque dur.

Les moyens 28 de stockage d'informations sont destinés à contenir des informations 60 enregistrées et transmises à l'aide des moyens 2 d'enregistrement et de transmission d'informations précédemment décrits. Chacune de ces informations 60 est stockée dans un format numérique, appelé ici format d'entrée.

L' annuaire électronique 32 est enregistré par exemple dans une base de données classique. Il contient des informations publiques relatives aux destinataires, telles que par exemple celles nécessaires à l'identification d'un destinataire particulier dans l'annuaire électronique, c'est-à-dire ici le nom et le prénom du destinataire. Ces informations publiques sont accessibles à l'ensemble des utilisateurs du système 1. L'annuaire 32 contient également des informations confidentielles relatives aux destinataires, c'est-à-dire qu'elles ne sont pas accessibles à l'expéditeur. Elles se composent notamment pour chaque destinataire d'une liste des moyens de communication dont il est équipé et des informations nécessaires pour les mettre en oeuvre. Ainsi, par exemple, cette liste comporte pour chaque destinataire son numéro de téléphone fixe personnel et son adresse personnelle. D'autres informations sont également enregistrées dans l'annuaire 32 pour chaque destinataire, telles que par exemple un classement des moyens de communication par ordre de préférence.

Les moyens 30 de stockage d'informations sont destinés à stocker des informations supplémentaires à celles contenues dans l'annuaire électronique 32.

Ces moyens 30 de stockage d'informations supplémentaires contiennent des informations qui ne sont pas directement liées à un membre de l'annuaire 32. Par exemple ils contiennent un journal 62 de transmission d'informations, des « méta-informations » 63, et des paramètres 64 nécessaires au fonctionnement du système 1.

Le journal 62 de transmission, dont on verra l'intérêt à la lecture de la suite de la description, contient pour chaque transmission d'informations une date de début d'action, un type d'action et un résultat d'action.

Les méta-informations 63 se composent de précisions sur les informations 60, spécifiées lors de l'enregistrement de ces dernières par un expéditeur. Ces méta-informations sont par exemple :
un degré d'urgence de l'information 60 à transmettre ;
un titre de l'information à transmettre.

Les paramètres 64 comportent des informations nécessaires pour établir une stratégie de sélection des moyens de communication 10 à utiliser. Ils comportent notamment un tableau 66, appelé ici « tableau de correspondance » et à titre d'exemple des règles 68 de sélection des moyens de communication 10.

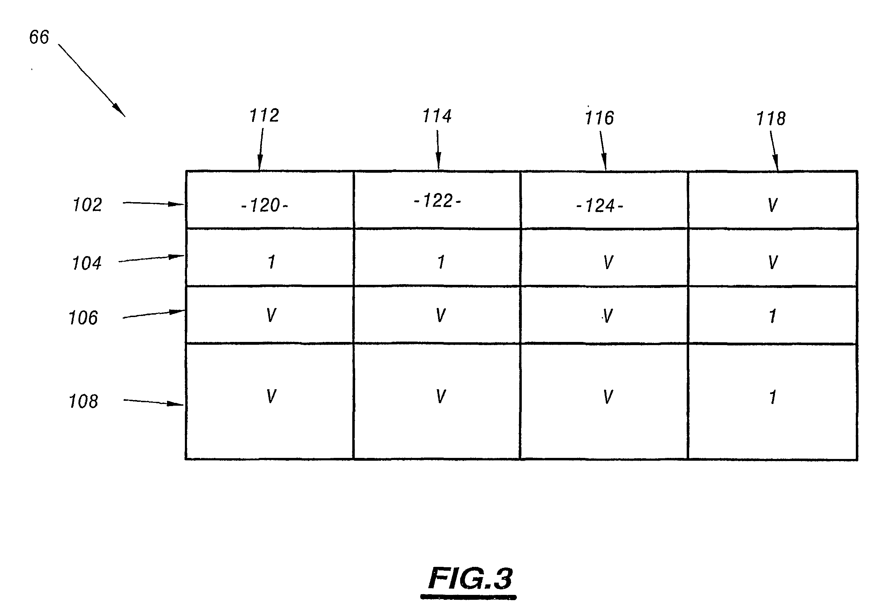

Le tableau de correspondance 66 sera décrit en regard de la figure 3. Ce tableau est réalisé, par exemple à partir d'une base de données.

Les règles 68 de sélection des moyens de communication à utiliser sont structurées comme suit : « Si X alors Y »; X étant une condition et Y étant une action à entreprendre si la condition X est satisfaite. Ces règles sont adaptées pour être mises en oeuvre par un système expert classique (non représenté). Ici, les règles suivantes sont utilisées :
Si un destinataire est équipé de plusieurs moyens de communication, alors utiliser le moyen de communication préféré de ce dernier.
Si un destinataire est équipé d'aucun moyen de communication alors ne pas chercher à le joindre.
Si l'information à transmettre est urgente alors utiliser les premiers et les troisièmes moyens de communication 48, 54, c'est-à-dire le téléphone mobile et le télécopieur.
Si la transmission d'informations avec les premiers moyens de communication préférés a échouée alors utiliser les secondes moyens de communication préférés du destinataire.

On conçoit ainsi à l'aide de l'exemple précédent qu'il est possible de définir une multitude de stratégies et de règles pour joindre chaque destinataire en fonction d'informations accessibles par le serveur 8.

En variante, les informations supplémentaires sont enregistrées dans l'annuaire électronique ce dernier formant ainsi à la fois l'annuaire électronique et les moyens de stockage d'informations supplémentaires.

L'annuaire électronique 32 et les moyens 30 de stockage d'informations supplémentaires sont associés à des moyens 74 de consultation et de mise à jour de ceux-ci. Ces moyens de consultation et de mise à jour sont des moyens classiques tels que par exemple un module logiciel adapté pour créer des pages au format HTML à partir des informations de l'annuaire 32 et/ou des moyens de stockage d'informations supplémentaires. Ces pages au format HTML sont alors consultables par l'intermédiaire du réseau Internet 6, à partir de postes de consultation classiques (non représentés), tels que des ordinateurs équipés d'un navigateur Internet. De manière à assurer la confidentialité des informations confidentielles les moyens 74 de consultation comportent des moyens 75 pour conserver la confidentialité de celles-ci. Les moyens 75 sont par exemple aptes à demander un mot de passe avant d'autoriser l'accès aux informations confidentielles, le mot de passe n'étant connu que du seul destinataire concerné par ces informations et étant inconnu de l'expéditeur.

En variante, les moyens 75 comportent une mémoire dans laquelle est enregistrée l'adresse Internet, également appelée adresse IP (Internet Protocol), de chaque poste de consultation utilisé par un destinataire pour mettre à jour les informations confidentielles le concernant. Dans cette variante, les moyens 75 sont aptes à identifier l'adresse IP du poste de consultation utilisé par un destinataire de manière à la comparer à celle enregistrée dans sa mémoire. Si l'adresse IP du poste de consultation utilisé correspond à celle enregistrée dans la mémoire des moyens 75, alors l'accès aux informations confidentielles est autorisé. On notera que dans cette variante, les moyens 75 identifient le poste de consultation utilisé et non pas le destinataire, ce qui dispense ce dernier de saisir un mot de passe.

Le serveur 8 comprend également des moyens 76 pour sélectionner les destinataires des informations 60 enregistrées, des moyens 78 automatisés de sélection des moyens de communication et des moyens 90 d'adaptation des informations enregistrées 60.

Les moyens 76 pour sélectionner les destinataires des informations enregistrées 60 sont classiques. Ils comportent par exemple une page au format HTML destinée à être consultée par des expéditeurs par l'intermédiaire du réseau Internet 6. Cette page HTML est adaptée pour qu'un expéditeur sélectionne une liste de destinataires parmi ceux de l'annuaire électronique 32 et l'associe à des informations enregistrées 60 formant ainsi un message électronique.

Les moyens 78 automatisés de sélection sont adaptés pour lire les informations contenues dans les moyens 28 et 30 de stockage d'informations et les informations publiques et/ou confidentielles contenues dans l'annuaire électronique 32. Ils sont également aptes à sélectionner automatiquement à l'aide de ces informations un ou plusieurs moyens de communication à utiliser.

Les moyens 78 comportent un système expert classique apte à utiliser les paramètres 64 et notamment les règles 68.

En variante ce système expert est remplacé par d'autres moyens adaptés pour définir et appliquer automatiquement une stratégie de sélection des moyens de communication à utiliser tels que par exemple des logiciels d'intelligence artificielle.

De plus les moyens 78 comportent également des moyens 80 aptes à déterminer le format d'entrée dans lequel les informations 60 ont été enregistrées. Ainsi, dans le cadre du serveur Internet 8, le format des informations 60 est déterminé automatiquement à partir de leur type MIME (Multipurpose Intemet Mail Extension). Le type MIME est une codification utilisée dans le langage HTML pour définir le type et le format de documents informatiques tels que par exemple des fichiers textes, sons, ou vidéos.

Dans cet exemple de réalisation et de façon non limitative, le format de l'information 60 ne peut être que l'un des formats suivants :
« vidéo » pour des séquences vidéo. A titre d'exemple un format « vidéo » peut être le format connu sous le nom de « MPEG ».
« audiophonique » pour des messages sonores. A titre d'exemple un format « audiophonique » peut être le format identifié par l'extension de fichier « *.wav ».
« image » pour des représentations graphiques. A titre d'exemple un format « image » peut être le format identifié par l'extension de fichier « *.gif » ou « *.jpg ».
« texte » pour des textes dactylographiés. A titre d'exemple un format « texte » peut être le format identifié par l'extension de fichier « *.doc » ou « * .txt ».

Les moyens 78 automatisés de sélection commandent en sortie les moyens 90 d'adaptation des informations enregistrées.

En variante, les moyens 76 de sélection des destinataires des informations 60 sont munis de moyens de spécification du format d'entrée des informations 60. Dans une autre variante, le format de l'information est déterminé automatiquement à partir de l'extension du fichier numérique dans lequel l'information est enregistrée, par exemple « *.jpg » pour une image.

Les moyens 90 d'adaptation sont destinés à adapter une information 60 reçue en entrée, aux moyens de communication 10 raccordés au serveur 8. Ces moyens 90 comportent plusieurs modules d'adaptation, chaque module étant apte à transformer une information 60 enregistrée dans un format d'entrée, en une information adaptée à au moins l'un des moyens de communication 10.

Ces modules d'adaptation sont ici formés avec des moyens logiciels. Ces modules logiciels ne seront pas décrits ici en détail, en effet ils sont classiques et dépendent des spécifications techniques du format d'entrée de l'information 60 à transmettre ainsi que de celles des moyens de communication 10. Ainsi la société française DataMedia (DataMedia Califomia : Bât. A, Hall C, l'Occitane, BP 673, 31319 La berge Cedex, France) en commercialise un grand nombre.

Dans l'exemple de mode de réalisation décrit ici et de façon non limitative, les moyens 90 comportent les modules logiciels suivants :
un module 94 apte à extraire d'une séquence vidéo au format « vidéo », un message sonore au format « audiophonique »;
un module 95 apte à extraire d'une séquence vidéo, une première image au format « image »;
un module 96 de synthèse vocale apte à créer un message sonore au format « audiophonique » à partir d'une information au format « texte » ;

Les moyens 90 sont aptes à transmettre aux moyens de communication 10 l'information adaptée correspondante.

La figure 3 représente un exemple de tableau de correspondance 66 formé de quatre lignes 102, 104, 106 et 108 et de quatre colonnes 112, 114, 116, et 118, l'intersection entre une colonne et une ligne formant une cellule. Les lignes indiquent le format d'entrée de l'information 60 à transmettre. Ici les lignes 102, 104, 106 et 108 indiquent les formats d'informations précédemment définis, c'est-à-dire respectivement : « vidéo », « audiophonique », « image » et « texte ».

Les colonnes indiquent les moyens de communication auxquels est raccordé le serveur 8. Ici, les colonnes 112, 114, 116 et 118 indiquent respectivement les premiers, deuxièmes, troisièmes et quatrièmes moyens de communication 48, 52, 54 et 56.

Les cellules du tableau 66 comportent une référence vers le module logiciel apte à transformer une information dont le format d'entrée est celui indiqué par la ligne de la cellule, et dont le format de sortie est adapté au moyen de communication indiqué par la colonne de la cellule. Ainsi, dans cet exemple, le module logiciel 94 précédemment décrit est référencé par deux cellules 120 et 122 à l'intersection de la ligne 102 et des colonnes respectives 112 et 114. Ces cellules 120, 122 sont ainsi à l'intersection de la ligne indiquant que le format d'entrée des informations est « vidéo » et des colonnes indiquant que le format de sortie est adapté respectivement aux premiers et aux seconds moyens de communication 48, 52, c'est à dire aux téléphones mobiles et aux téléphones fixes. Le module logiciel 95 est référencé par une cellule 124 à l'intersection de la ligne 102 et de la colonne 116, indiquant ainsi que le format d'entrée des informations 60 est « vidéo » et que le format de sortie est adapté aux troisièmes moyens de communication 54, c'est-à-dire aux télécopieurs.

On notera que certaines cellules du tableau 66 comportent un symbole « v », indiquant par là l'absence de module d'adaptation correspondant.

On notera également que certaines cellules du tableau 66 comporte un symbole « 1 ». Ce symbole indique qu'il n'est pas nécessaire de mettre en oeuvre un module logiciel d'adaptation. Par exemple, ici, une information 60 dans un format d'entrée « texte » est transmise sans adaptation particulière aux quatrièmes moyens 56 de communication, c'est à dire aux ordinateurs adaptés pour recevoir du courrier électronique.

En variante, certaines cellules référencent plusieurs modules logiciels. Par exemple une cellule d'un tableau de correspondance référence un module logiciel tel que le module 94 et également un module logiciel apte à transformer au format « audiophonique » le titre de l'information au format « vidéo ».

Le fonctionnement du système 1 va maintenant être décrit à l'aide des figures 1 à 3 et dans le cas particulier d'un destinataire équipé d'un téléphone fixe, d'un téléphone mobile et d'un télécopieur.

Un expéditeur enregistre une séquence vidéo dans un format « vidéo » à l'aide d'un ordinateur tel que l'ordinateur 20 équipé d'un microphone 24 et d'une camera 22. Ensuite, à l'aide du navigateur Internet 26, il se connecte au serveur 8. Grâce aux moyens 76 de sélection d'une liste de destinataires et au navigateur Internet, il crée une liste de destinataires et transmet au serveur 8 la séquence vidéo. Cette séquence vidéo est enregistrée dans les moyens 28 de stockage d'informations et forme ainsi une information 60 dans un format d'entrée « vidéo ». Ensuite, il indique que l'information à transmettre est urgente. A l'issue de ces opérations il se déconnecte du serveur 8.

Une fois l'expéditeur déconnecté, le serveur 8 active les moyens 78 automatisés de sélection des moyens de communication à utiliser. Ces moyens 78 déterminent que pour une information au format d'entrée « vidéo », la ligne 102 du tableau 66 comporte trois cellules remplies : les cellules 120, 122 et 124, indiquant par cela que les premiers, les deuxièmes et les troisièmes moyens de communication sont utilisables. De plus le contenu de ces cellules 120, 122 et 124, indique quels sont les modules d'adaptation à mettre en oeuvre. Ici il s'agit des modules logiciels 94 et 95.

Le système expert des moyens 78 de sélection détermine alors parmi les moyens de communication utilisables ceux qui doivent être mis en oeuvre en fonction des informations dont il dispose, c'est-à-dire celles contenues dans l'annuaire électronique 32 et dans les moyens 30 de stockage d'informations supplémentaires.

Ici, seuls sont utilisés les moyens de communication 10 dont le destinataire est équipé. De plus, puisque l'information à transmettre est urgente, les moyens 92 sélectionnent le téléphone mobile et le télécopieur comme moyens de communication, conformément à l'une des règles 68 (figure 2.).

Ensuite, les moyens 78 de sélection commandent les modules d'adaptation 94, 95 pour décomposer la séquence vidéo en deux informations adaptées. Le module logiciel 94 crée la première information adaptée comportant la partie audiophonique de la séquence vidéo et le module 95 crée la seconde information adaptée comportant la première image de la séquence vidéo. La première information adaptée est alors transmise de façon classique jusqu'au téléphone mobile du destinataire par l'intermédiaire du réseau Internet 6, de la passerelle 40 et du réseau hertzien 46. La seconde information adaptée est quant à elle transmise jusqu'au télécopieur du destinataire par l'intermédiaire du réseau Internet 6, de la passerelle 42 et du réseau commuté 50.

Les moyens 78 de sélection de moyens de communication enregistrent également la date de début de communication, les moyens de communication utilisés et le résultat de la communication pour chaque destinataire dans le journal 62. De même les accusés de réception générés par les moyens de communication sont enregistrés dans ce même journal.

Ce journal 62 étant accessible par l'intermédiaire des moyens 74 de consultation, les expéditeurs comme les destinataires peuvent les consulter et connaître ainsi les opérations de communication entreprises et leur résultat.

Lorsqu'un destinataire désire modifier des informations confidentielles enregistrées dans l'annuaire 32, il se connecte à l'aide d'un poste de consultation (non représenté) au serveur 8 et saisit son mot de passe. Si le mot de passe est reconnu par les moyens 75 pour conserver la confidentialité, alors il peut modifier, ajouter ou supprimer des informations confidentielles le concernant.

Dans une variante non-représentée, les moyens de communication comportent des cinquièmes moyens formés de téléphones fixes ou mobiles équipés de claviers à touches DTMF (Dual Tone Multifrequencies) et des moyens pour accuser la réception d'un message sonore reçu sous forme d'un signal analogique. Dans cette variante, le serveur est équipé de moyens pour ajouter au message sonore un message sonore supplémentaire demandant au destinataire de confirmer la réception de ce message en appuyant sur une touche du clavier de son téléphone. La tonalité générée par la touche est alors reçue et enregistrée par les moyens pour accuser la réception du message sonore, formant ainsi un accusé de réception. Ces moyens permettent donc au destinataire d'accuser réception d'un message audiophonique reçu sous la forme d'un signal analogique, cet accusé de réception étant lui aussi enregistré dans même journal de transmission analogue au journal 62 des du dispositif de la figure 2.

## Revendications

1. Système (1) de transmission d'informations à une liste de destinataires choisis dans un annuaire électronique (32), ledit système comportant:
- des moyens (2) pour enregistrer dans un format d'entrée les informations à transmettre;
- des moyens (76) pour sélectionner par des expéditeurs les destinataires des informations enregistrées, dans l'annuaire électronique;
- plusieurs moyens de communication (48, 52, 54, 56), adaptés chacun pour transmettre des informations enregistrées dans un format particulier;
**caractérisé en ce qu'**il comporte des moyens (78) automatisés de sélection des moyens de communication à utiliser au moins en fonction du format d'entrée des informations à transmettre.

2. Système (1) selon la revendication 1 **caractérisé en ce que** les moyens (78) automatisés de sélection comportent des moyens (80) de détermination du format d'entrée des informations à transmettre à partir du type de celles-ci.

3. Système (1) selon l'une quelconque des revendications précédentes, **caractérisé en ce qu'**il comporte des modules d'adaptation (94, 95, 96) aptes à transformer une information enregistrée dans un format d'entrée prédéterminé, en une information adaptée pour être transmise par au moins l'un desdits moyens de communication (48, 52, 54, 56), et **en ce que** les moyens (78) de sélection déterminent les moyens de communication (48, 52, 54, 56) à utiliser en partie en fonction de l'existence pour une information à transmettre de modules d'adaptation correspondants.

4. Système (1) selon l'une quelconque des revendications précédentes, **caractérisé en ce qu'**il comporte des moyens de stockage d'informations (30, 32) destinées à déterminer en partie les moyens de communication à utiliser.

5. Système (1) selon la revendication 4, **caractérisé en ce que** les moyens de stockage d'informations (30, 32) contiennent des informations indiquant quels sont les moyens de communication (48, 52, 54, 56) dont le destinataire est équipé.

6. Système (1) selon l'une quelconque des revendications précédentes, **caractérisé en ce que** les moyens de stockage d'informations (30, 32) contiennent des informations indiquant quels sont les moyens de communication préférés de chaque destinataire, et **en ce que** les moyens (78) de sélection déterminent les moyens de communication à utiliser en partie en fonction de ces informations.

7. Système (1) selon l'une quelconque des revendications précédentes, **caractérisé en ce que** les moyens de stockage d'informations (30, 32) contiennent des informations indiquant quel est le degré d'urgence d'une information à transmettre, et **en ce que** les moyens (78) de sélection déterminent les moyens de communication à utiliser en partie en fonction de ces informations.

8. Système (1) selon l'une quelconque des revendications précédentes, **caractérisé en ce qu'**il comporte des moyens (75) pour conserver la confidentialité d'au moins certaines des informations contenues dans les moyens (30, 32) de stockage d'informations, vis à vis des expéditeurs des informations à transmettre.

9. Système (1) selon la revendication 8, **caractérisé en ce que** lesdites certaines des informations contenues dans les moyens de stockage d'informations se composent au moins des informations nécessaires pour mettre en oeuvre les moyens de communication dont le destinataire est équipé.

10. Système (1) selon l'une quelconque des revendications précédentes **caractérisé en ce qu'**il comporte des moyens de confirmation de la réception de messages sonores sous la commande de moyens de communication formé de téléphones munis de claviers à touches.

## Claims

1. System (1) for transmitting data to a list of chosen recipients in an electronic directory (32), said system comprising:
- means (2) for recording the data to be transmitted in an input format;
- means (76) for selecting by senders the recipients of the recorded data, in the electronic directory;
- a plurality of means of communication (48, 52, 54, 56), each of these means being adapted to transmit data recorded in a particular format;
**characterised in that** it comprises automated means (78) for selecting the means of communication to be used at least as a function of the input format of the data to be transmitted.

2. System (1) according to claim 1, **characterised in that** the automated selection means (78) comprise means (80) for determining the input format of the data to be transmitted from the type of the latter.

3. System (1) according to any of the preceding claims, **characterised in that** it comprises adaptation modules (94, 95, 96) which are able to transform data recorded in a predetermined input format into data adapted to be transmitted by at least one of said means of communication (48, 52, 54, 56), and **in that** the selection means (78) determine the means of communication (48, 52, 54, 56) to be used in part as a function of the existence, for data to be transmitted, of corresponding adaptation modules.

4. System (1) according to any of the preceding claims, **characterised in that** it comprises data storage means (30, 32) which are intended to determine in part the means of communication to be used.

5. System (1) according to claim 4, **characterised in that** the data storage means (30, 32) contain data which indicate what the means of communication (48, 52, 54, 56) are, with which the recipient is equipped.

6. System (1) according to any of the preceding claims, **characterised in that** the data storage means (30, 32) contain data which indicate what the preferred means of communication of each recipient are, and **in that** the selection means (78) determine the means of communication to be used in part as a function of these data.

7. System (1) according to any of the preceding claims, **characterised in that** the data storage means (30, 32) contain data which indicate what the degree of urgency of data to be transmitted is, and **in that** the selection means (78) determine the means of communication to be used in part as a function of these data.

8. System (1) according to any of the preceding claims, **characterised in that** it comprises means (75) for maintaining the confidentiality of at least certain of the data contained in the data storage means (30, 32) with respect to the senders of the data to be transmitted.

9. System (1) according to claim 8, **characterised in that** said certain data contained in the data storage means are composed at least of the data necessary for using the means of communication, with which the recipient is equipped.

10. System (1) according to any of the preceding claims, **characterised in that** it comprises means for confirming the reception of sound messages under the control of the means of communication formed by telephones provided with keypads.

## Patentansprüche

1. System (1) zur Übertragung von Daten an eine Liste von in einem elektronischen Telefonbuch (32) ausgewählten Empfängern, wobei das System Folgendes aufweist:
- Einrichtungen (2) zur Eingabe der zu übertragenden Daten in ein Eingabeformat;
- Einrichtungen (76) zur Auswahl der Empfänger der eingegebenen Daten in dem elektronischen Telefonbuch durch die Absender;
- mehrere Kommunikationseinrichtungen (48, 52, 54, 56), jede angepasst zur Übertragung der in einem besonderen Format eingegebenen Daten;
**dadurch gekennzeichnet, dass** es automatisierte Einrichtungen (78) zur Auswahl der Kommunikationseinrichtungen zur Ausnutzung zumindest in Abhängigkeit des Eingabeformats der zu übertragenden Daten aufweist.

2. System (1) nach Anspruch 1, **dadurch gekennzeichnet, dass** die automatisierten Auswahleinrichtungen (78) Einrichtungen (80) zur Festlegung des Eingabeformats der zu übertragenden Daten ausgehend von derem Typ aufweisen.

3. System (1) nach einem der vorhergehenden Ansprüche, **dadurch gekennzeichnet, dass** es Anpassungsmodule (94, 95, 96) aufweist, welche zur Umwandlung einer eingegebenen Dateneinheit in einem vorher festgelegten Eingabeformat in eine angepasste Dateneinheit geeignet sind, um durch zumindest eine der Kommunikationseinrichtungen (48, 52, 54, 56) übertragen zu werden, und dass die Auswahleinrichtungen (78) die Kommunikationseinrichtungen (48, 52, 54, 56) festlegen, um teilweise für eine zu übertragende Dateneinheit korrespondierende Anpassungsmodule abhängig von derem Vorhandensein zu benutzen.

4. System (1) nach einem der vorhergehenden Ansprüche, **dadurch gekennzeichnet, dass** es Einrichtungen zur Speicherung von Daten (30, 32) aufweist, welche teilweise zur Festlegung der zu benutzenden Kommunikationseinrichtungen bestimmt sind.

5. System (1) nach Anspruch 4, **dadurch gekennzeichnet, dass** die Einrichtungen zur Speicherung von Daten (30, 32) Daten enthalten, welche die Kommunikationseinrichtungen (48, 52, 54, 56) angeben, mit denen der Empfänger ausgerüstet ist.

6. System (1) nach einem der vorhergehenden Ansprüche, **dadurch gekennzeichnet, dass** die Einrichtungen zur Speicherung von Daten (30, 32) Daten enthalten, welche die bevorzugten Kommunikationseinrichtungen (48, 52, 54, 56) eines jeden Empfängers angeben, und dass die Einrichtungen (78) zur Auswahl die zu benutzenden Kommunikationseinrichtungen teilweise in Abhängigkeit von diesen Daten festlegen.

7. System (1) nach einem der vorhergehenden Ansprüche, **dadurch gekennzeichnet, dass** die Einrichtungen zur Speicherung von Daten (30, 32) Daten enthalten, welche den Grad der Dringlichkeit einer zu übertragenden Dateneinheit angeben, und dass die Einrichtungen (78) zur Auswahl die zu benutzenden Kommunikationseinrichtungen teilweise in Abhängigkeit von diesen Daten festlegen.

8. System (1) nach einem der vorhergehenden Ansprüche, **dadurch gekennzeichnet, dass** es Einrichtungen (75) zur Wahrung der Vertraulichkeit von zumindest bestimmten Daten, die in den Einrichtungen zur Speicherung von Daten (30, 32) enthalten sind, gegenüber den Absendern der zu übertragenden Daten aufweist.

9. System (1) nach Anspruch 8, **dadurch gekennzeichnet, dass** die in den Einrichtungen zur Speicherung von Daten bestimmten Daten sich zumindest aus notwendigen Daten zur Benutzung der Einrichtungen zur Kommunikation zusammensetzen, mit denen der Empfänger ausgerüstet ist.

10. System (1) nach einem der vorhergehenden Ansprüche, **dadurch gekennzeichnet, dass** es Einrichtungen zur Empfangsbestätigung von Sprachmitteilungen unter der Betätigung von Kommunikationseinrichtungen aufweist, die von mit Drucktastaturen ausgerüsteten Telefonen erzeugt werden.
